# EUROPEAN PATENT APPLICATION

(11) **EP 4 398 022 A1**
(43) Date of publication of application: **10.07.2024**
(21) Application number: 23855825.8
(22) Date of filing: 09.06.2023
(51) Int. Cl.: G02C 5/22, G02C 11/02

(54) **DETACHABLE MODULAR GLASSES**

(30) Priority: 20.09.2022 KR 20220118247
(71) Applicant: Lee, Mi Jin, Taebaek-si, Gangwon-do 26006 (KR)
(72) Inventor: Lee, Mi Jin, Taebaek-si, Gangwon-do 26006 (KR)
(74) Representative: Isarpatent
(86) International application number: PCT/KR2023/007946
(87) International publication number: WO 2024/063254

(57) **Abstract**

Provided is a pair of detachable modular glasses capable of partially replacing components constituting the glasses to customize the glasses in various designs according to a user's tastes or purposes.

The detachable modular glasses includes a front frame to which lenses are coupled, a hinge coupled to each of both ends of the front frame, and a temple rotatably coupled to the hinge, wherein each of the front frame and the temple is detachably coupled to the hinge to be selectively replaceable.

## Description

### TECHNICAL FIELD

The present invention relates to a pair of detachable modular glasses, and more particularly, to a pair of detachable modular glasses capable of being attached and detached to be changed in design, color, shape, and function of the glasses.

### BACKGROUND ART

In general, a pair of glasses is a device used not only for vision correction but also for eye protection against strong ultraviolet rays or as fashion accessories. Basic components of the glasses include a pair of rims which is an eyeglass frame to which lenses are coupled, a bridge that connects the rims to each other, temples which are legs of the glasses integrally coupled to both sides of the rims through screws to be held on the ears, and nose pads.

A pair of glasses according to the related art has a structure in which temples are integrally connected to rims through screws, and thus there are problems that partial replacement is difficult, and accordingly, various changes in design are difficult.

Moreover, the pair of glasses according to the related art is inconvenient in that when the hinge is damaged, the pair of glasses has to be replaced as a whole, and also, as the screws fastened to the rims often loosen, the screws are periodically fastened.

In addition, there are problems that the pair of glasses according to the related art requires a separate tool such as a screwdriver to disassemble the temples from the rims or assemble the temples with the rims, and because of difficulty in operation of the tool, it takes a lot of time to assemble/disassemble the temples.

### [Prior art document]

### [Patent document]

(Patent document 1) Korean Patent Publication No. 10-2019-0034530

### DISCLOSURE OF THE INVENTION

### TECHNICAL PROBLEM

The present invention has been devised to solve the problems as above, and an object of the present invention is to provide a pair of detachable modular glasses capable of partially replacing components constituting the pair of glasses to customize the pair of glasses in various designs according to a user's tastes or purposes.

Another object of the present invention is to provide a pair of detachable modular glasses in which when the glasses are damaged, only a related component is replaceable to increase useful lifespan of a product.

Still another object of the present invention is to provide a pair of detachable modular glasses capable of rapidly and tightly assembling components without using a separate tool so that usability and convenience are increased, and a user's inconvenience caused by assembling screws periodically is eliminated.

In terms of production, still another object of the present invention is to provide a pair of detachable modular glasses capable of minimizing production of unnecessary components and accordingly, minimizing inventory.

The technical objects of the present invention are not limited to the aforesaid, but other technical objects not described herein will be clearly understood by those skilled in the art from descriptions below.

### TECHNICAL SOLUTION

A pair of detachable modular glasses according to the present invention for resolving the above problems includes: a front frame to which lenses are coupled; a hinge coupled to each of both ends of the front frame; and a temple rotatably coupled to the hinge, wherein each of the front frame and the temple is detachably coupled to the hinge to be selectively replaceable.

The pair of detachable modular glasses may further include a detachable module detachably coupled to the hinge so as to be disposed to overlap a front surface of the front frame.

The front frame may include: a rim to which each of the lenses is detachably coupled; a bridge which connects the rims to each other; a nose support including an arm integrally connected to the rim, and a pad integrally connected to an end of the arm; and a coupling piece extending from the rim to be detachably coupled to the hinge. The coupling piece may include: a protrusion extending from an end of the rim to be parallel; an insertion part which extends vertically from an end of the protrusion to be inserted into the hinge, and in which a through-hole is defined; an elastic pressing part that protrudes from each of an upper end and a lower end of the insertion part, and is pressed by an inner surface of the hinge to apply repulsive force against elastic force to the inner surface of the hinge while being moved inward so that the elastic pressing part is press-inserted into the hinge; and a hooking part disposed on an end of the insertion part, and protruding to the outside of the hinge to be hooked and supported by an end of the hinge. The temple may include: a body detachably coupled to the hinge; a coupling hook that is detachably coupled to the hinge, and rotates around the hinge to fold the body; and a slider that is slidably coupled to the body along an outer surface of the coupling hook, and allows to couple the coupling hook to the hinge or separate the coupling hook from the hinge. The body may include: a base part having an outer surface to which the slider is slidably coupled, an inner portion in which a first coupling hole to which a portion of the coupling hook is coupled is defined, and an end on which a hooking projection that restricts movement of the slider is provided; a first tip portion disposed on one end of the base part to be detachably coupled to the hinge, and having an inner portion in which a second coupling hole to which an end of the coupling hook is detachably coupled is defined; and a second tip portion extending from the other end of the base part to be bent. The coupling hook may include: a fixed part detachably coupled to the base part; a rotatable part extending from the fixed part, and provided so that when the rotatable part is pressed by the slider, the rotatable part is moved inward, and when the pressing of the slider is released, the rotatable part is moved outward due to elastic force; and a coupling tip extending from an end of the rotatable part, and provided so that when the rotatable part is moved inward, the coupling tip passes through the hinge to be coupled to the first tip portion, and when the rotatable part is moved outward, the coupling tip is separated from the first tip portion and the hinge.

The detachable module may include: a body part to which auxiliary lenses are detachably coupled; and an auxiliary coupling piece disposed on a rear surface of the body part, and detachably coupled to the hinge. The auxiliary coupling piece may include: an auxiliary insertion part, which is inserted into the hinge and in which an auxiliary through-hole to which the coupling tip coupled to the through-hole is detachably coupled is defined; and an auxiliary elastic pressing part which protrudes from each of an upper end and a lower end of the auxiliary insertion part, and is pressed by an inner surface of the hinge to apply repulsive force against elastic force to the inner surface of the hinge while being moved inward so that the auxiliary elastic pressing part is press-fitted into the hinge. The hinge may include: a first slot into which the coupling piece is inserted; a second slot into which the first tip portion is inserted; a third slot which is disposed between the first slot and the second slot to communicate with the second slot, and into which the auxiliary coupling piece is inserted; a hooking groove with which the hooking part is hooked to be supported; a first insertion hole which allows an external space and the first slot to communicate with each other and into which the coupling tip is insertable; and a second insertion hole which allows the first slot and the third slot to communicate with each other and into which the coupling tip is insertable. When the coupling piece is inserted into the first slot, the first tip portion is inserted into the second slot, and the auxiliary coupling piece is inserted into the third slot, the through-hole, the second coupling hole, and the auxiliary through-hole may communicate with each other through the first insertion hole and the second insertion hole. When the rotatable part is pressed by the slider, the coupling tip may be inserted and coupled to the first insertion hole, the through-hole, the second insertion hole, the auxiliary through-hole, and the second coupling hole in sequence.

The fixed part may include: a first support inserted into the first coupling hole to be hooked and supported by an inner surface of the base part; and a second support connected to the first support to be hooked and supported to an outer surface of the base part. The rotatable part may be provided in sections to be further and further apart from the base part in a longitudinal direction. The rotatable part may include: a first rotatable section which extends from the first support to be disposed to be parallel to the inner surface of the base part and is spaced a first distance from the inner surface of the base part; a second rotatable section which is disposed to be parallel to the inner surface of the base part and is spaced a second distance greater than the first distance from the inner surface of the base part; a third rotatable section which is coupled to the coupling tip to be disposed to be parallel to the inner surface of the base part and is spaced a third distance greater than the second distance from the inner surface of the base part; a first inclined section which connects the first rotatable section to the second rotatable section; and a second inclined section which connects the second rotatable section to the third rotatable section. The slider may slidably move between the first rotatable section and the second inclined section.

The front frame and the detachable module may be detachably coupled to each other through magnetic force, and the front frame may include: a positioning groove recessed in a front surface of a protrusion; and a first coupling magnet accommodated inside the positioning groove. The detachable module may include: a positioning protrusion protruding from a rear surface of a body part to be detachably coupled to the positioning groove; and a second coupling magnet accommodated inside the positioning protrusion to be detachably coupled to the first coupling magnet through magnetic force. Each of the positioning groove and the positioning protrusion may have a wedge shape in which an outside diameter thereof has a size that gradually decreases in an axial direction.

### ADVANTAGEOUS EFFECTS

According to the embodiment of the present invention, the partial replacement of the components constituting the pair of glasses is enabled. Thus, the pair of glasses may be customized in various designs according to the user's tastes or purposes, and accordingly, the pair of glasses having various shapes for the use may be achieved.

In addition, when the glasses are damaged, only the related component is replaceable. Thus, the useful lifespan of the product may be increased, and the expenses generated due to the repurchase of the product may be minimized to have the economic effects.

In addition, the components are capable of being rapidly and tightly assembled without using the separate tool. Thus, the usability and the convenience may be increased, and the user's inconvenience caused by assembling the screws periodically may be eliminated.

In addition, the partial replacement of the glasses is enabled to manufacture the produced components as the module. Thus, the production of the unnecessary components may be minimized, and accordingly, the inventory may be minimized.

The effects according to the present invention are not limited by the contents described above, and more various effects are included in the present specification.

### BRIEF DESCRIPTION OF THE DRAWINGS

FIG. 1 is a perspective view illustrating a pair of modular glasses according to an embodiment of the present invention.
FIG. 2 is an exploded perspective view illustrating a pair of modular glasses according to an embodiment of the present invention.
FIG. 3 is an exploded perspective view illustrating a coupling piece, a hinge, a first tip portion, and an auxiliary coupling piece according to an embodiment of the present invention.
FIG. 4 is a perspective view illustrating a temple according to another embodiment of the present invention.
FIG. 5 is a schematic view illustrating processes in which a coupling hook is coupled to a hinge, and separated from the hinge to another embodiment of the present invention.
FIG. 6 is a perspective view illustrating an auxiliary coupling piece according to another embodiment of the present invention.
FIG. 7 is a schematic view illustrating a positioning groove and a positioning protrusion another embodiment of the present invention.

### MODE FOR CARRYING OUT THE INVENTION

Hereinafter, embodiments will be described in more detail with reference to the accompanying drawings. However, various changes may be made to embodiments, and the scope of the present invention is not limited by these embodiments. The embodiments should be understood to include all changes, equivalents, and replacements within the idea and the technical scope of the disclosure.

Specific structural or functional descriptions for embodiments are merely exemplified for purposes of describing the embodiments according to the concept of the invention. The techniques set forth in this specification are not intended to be limited to the particular embodiments, but cover various modifications, equivalents, or alternatives of embodiments of the present disclosure.

Although the terms first, second, etc. may be used herein to describe various elements, these terms should be construed as only used to distinguish one element from another element. For example, a first element could be termed a second element, and similarly, a second element could be termed a first element.

It should be understood that when an element is referred to as being "connected to" another element, it can be connected or coupled directly to the other element, or intervening element may be present.

The terminology used herein is for the purpose of describing embodiments only and is not intended to be limiting of the invention. The singular forms are intended to include the plural forms as well, unless the context clearly indicates otherwise. It will be further understood that the terms such as "includes" or "has", when used herein, specify the presence of stated features, numerals, steps, operations, elements, parts, or the combination thereof, but do not preclude the presence or addition of one or more other features, numerals, steps, operations, elements, parts, or the combination thereof.

Unless otherwise defined, all terms including technical and scientific terms used herein have the same meaning as commonly understood by one of ordinary skill in the art to which this invention belongs. Terms as defined in a commonly used dictionary should be construed as having the same meaning as in an associated technical context, and unless defined apparently in the description, the terms are not ideally or excessively construed as having formal meaning.

In addition, in describing the embodiments with reference to the accompanying drawings, like elements are designated by like reference numerals, and redundant parts of the description are omitted. The parts unrelated to the description, or the detailed descriptions of related well-known art that may unnecessarily obscure subject matters of the present invention, will be ruled out.

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims.

Unless otherwise defined in the embodiments of the present invention, all terms including technical and scientific terms used herein have the same meaning as commonly understood by one of ordinary skill in the art to which this invention belongs. Terms as defined in a commonly used dictionary should be construed as having the same meaning as in an associated technical context, and unless defined apparently in the embodiments of the present invention, the terms are not ideally or excessively construed as having formal meaning.

The shapes, sizes, ratios, angles, numbers, and the like illustrated in the accompanying drawings for describing the various aspects of the present disclosure are merely examples, and the present invention is not limited thereto. The parts unrelated to the description, or the detailed descriptions of related well-known art that may unnecessarily obscure subject matters of the present invention, will be ruled out. When "comprising", "having", "consisting of", etc. are used in this specification, other components may be added unless "only" is used. Even when a component is explained in singular number, they are interpreted as plural number unless the context clearly indicates otherwise.

In interpretation of the components, even though separate explicit expressions are not provided, they are to be interpreted as including general tolerance.

When positional relation of two portions is explained by "on", "upper", "lower", "beside", etc., one or more components may be positioned between two portions unless "just" or "directly" is not used.

It is to be understood that an element or layer is referred to as being "on" another element or layer, it includes either intervening layers or other elements directly on or in between. Like reference numerals refer to like elements throughout the specification.

The sizes and thicknesses of the individual components shown in the drawings are shown merely for convenience of explanation, and the present invention is not necessarily limited to the size and thickness of the components shown in the drawings.

Each of the features of the various aspects of the present disclosure can be combined or combined with each other partly or entirely. The features of the various aspects can be technically interlocked and driven as well. The features of the various aspects can be practiced independently or in conjunction with each other independently of each other.

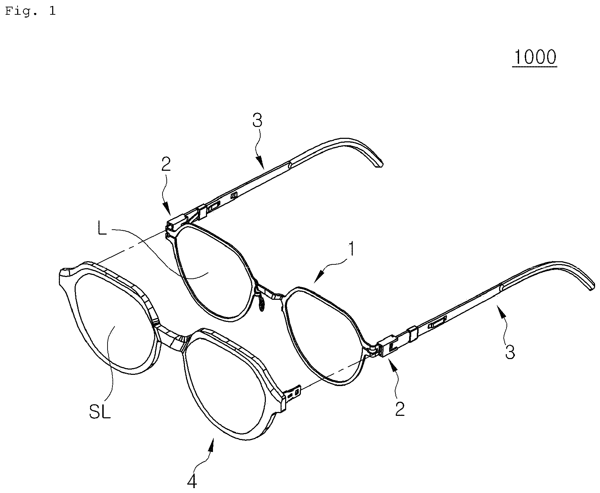

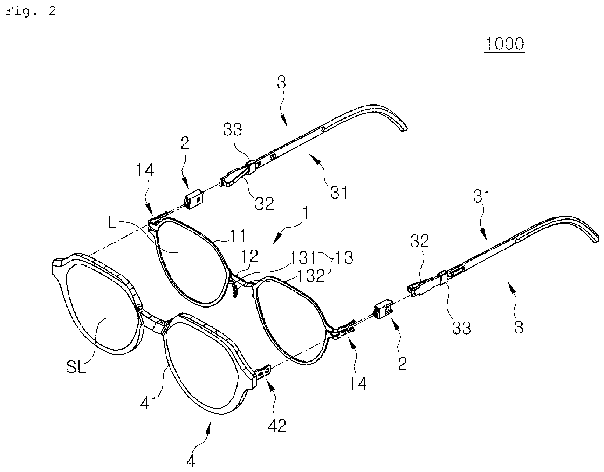

FIG. 1 is a perspective view illustrating a pair of modular glasses according to an embodiment of the present invention. FIG. 2 is an exploded perspective view illustrating a pair of modular glasses according to an embodiment of the present invention.

Referring to FIGS. 1 and 2, a pair of detachable modular glasses 1000 according to an embodiment of the present invention (hereinafter referred to as "modular glasses 1000") includes a front frame 1 to which lenses L are coupled, a hinge 2 coupled to each of both ends of the front frame 1, and a temple 3 rotatably coupled to the hinge 2.

Each of the front frame 1 and the temple 3 is provided to be detachably coupled to the hinge 2.

Thus, in the modular glasses 1000, each of the front frame 1 and the temple 3 is selectively replaceable.

In addition, the modular glasses 1000 may further include a detachable module 4.

The detachable module 4 may be detachably coupled to the hinge 2 so as to be disposed to overlap a front surface of the front frame 1.

Thus, in the modular glasses 1000, the front frame 1, the temple 3, and the detachable module 4 are capable of being selectively replaced. Accordingly, a design of the glasses may be variously customized according to a user's tastes, and a product may be used for the long term.

The front frame 1 may include a rim 11 to which each of the lenses L is detachably coupled, a bridge 12 which connects the rims 11 to each other, a nose support 13, which includes an arm 131 integrally connected to the rim 11, and a pad 132 integrally connected to an end of the arm 131, and a coupling piece 14 which extends from the rim 11 to be detachably coupled to the hinge 2.

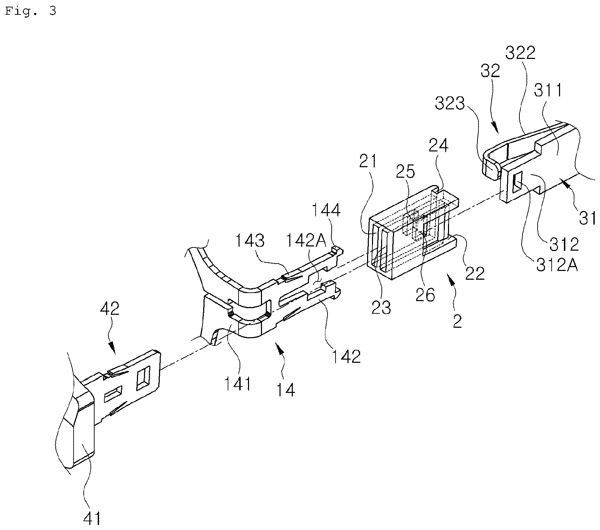

FIG. 3 is an exploded perspective view illustrating a coupling piece, a hinge, a first tip portion, and an auxiliary coupling piece according to an embodiment of the present invention.

Referring to FIGS. 2 and 3, the coupling piece 14 may include a protrusion 141 which extends from an end of the rim 11 to be parallel, an insertion part 142, which extends vertically from an end of the protrusion 141 to be inserted into the hinge 2, and in which a through-hole 142A is defined, an elastic pressing part 143 which protrudes from each of an upper end and a lower end of the insertion part 142, and is pressed by an inner surface of the hinge 2 to apply repulsive force against elastic force to the inner surface of the hinge 2 while being moved inward so that the elastic pressing part 143 is press-inserted into the hinge 2, and a hooking part 144 which is disposed on an end of the insertion part 142 and protrudes to the outside of the hinge 2 to be hooked with an end of the hinge 2.

Referring to FIG. 2, the temple 3 may include a body 31 which is detachably coupled to the hinge 2, a coupling hook 32 which is detachably coupled to the hinge 2 and rotates around the hinge 2 to fold the body 31, a slider 33 which is slidably coupled to the body 31 along an outer surface of the coupling hook 32 and couples the coupling hook 32 to the hinge 2 or separate the coupling hook 32 from the hinge 2.

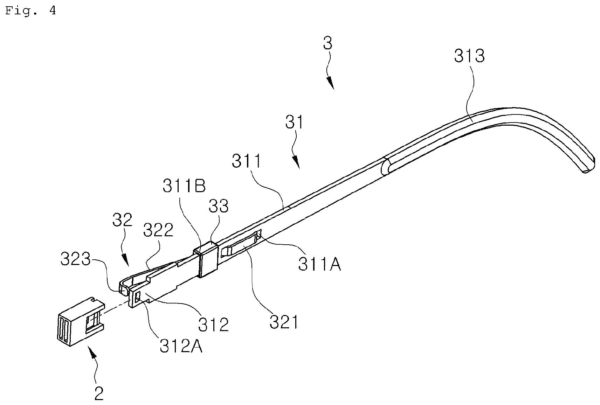

FIG. 4 is a perspective view illustrating a temple according to another embodiment of the present invention.

Referring to FIGS. 2 to 4, the body 31 may include a base part 311 having an outer surface to which the slider 33 is slidably coupled, an inner portion in which a first coupling hole 311A to which a portion of the coupling hook 32 is coupled is defined, and an end on which a hooking projection 311B that restricts movement of the slider 33 is provided, a first tip portion 312 which is disposed on one end of the base part 311 to be detachably coupled to the hinge 2 and has an inner portion in which a second coupling hole 312A to which an end of the coupling hook 32 is detachably coupled is defined, and a second tip portion 313 extending from the other end of the base part 311 to be bent.

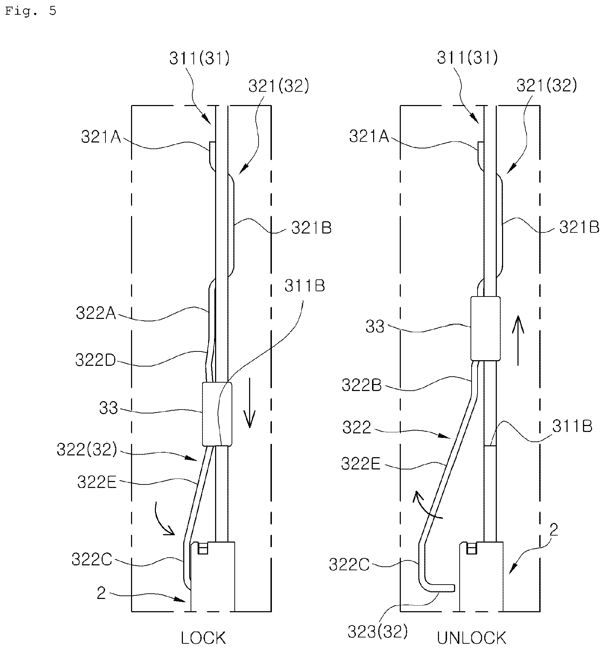

FIG. 5 is a schematic view illustrating processes in which a coupling hook is coupled to a hinge, and separated from the hinge to another embodiment of the present invention.

Referring to FIGS. 4 and 5, the coupling hook 32 may include a fixed part 321 detachably coupled to the base part 311, a rotatable part 322 extending from the fixed part 321 and provided so that when the rotatable part 322 is pressed by the slider 33, the rotatable part 322 is moved inward, and when the pressing of the slider 33 is released, the rotatable part 322 is moved outward due to elastic force, and a coupling tip 323 extending from an end of the rotatable part 322 to be provided so that when the rotatable part 322 is moved inward, the coupling tip 323 passes through the hinge 2 to be coupled to the first tip portion 312, and when the rotatable part 322 is moved outward, the coupling tip 323 is separated from the first tip portion 312 and the hinge 323.

The fixed part 321 may include a first support 321A inserted into the first coupling hole 311A to be hooked and supported by an inner surface of the base part 311, and a second support 321B connected to the first support 321A to be hooked and supported to an outer surface of the base part 311.

The rotatable part 322 may be provided in sections to be further and further apart from the base part 311 in a longitudinal direction.

Specifically, the rotatable part 322 may include a first rotatable section 322A which extends from the first support 321A to be disposed to be parallel to the inner surface of the base part 311 and is spaced a first distance from the inner surface of the base part 311, a second rotatable section 322B which is disposed to be parallel to the inner surface of the base part 311 and is spaced a second distance greater than the first distance from the inner surface of the base part 311, a third rotatable section 322C which is coupled to the coupling tip 323 to be disposed to be parallel to the inner surface of the base part 311 and is spaced a third distance greater than the second distance from the inner surface of the base part 311, a first inclined section 322D which connects the first rotatable section 322A to the second rotatable section 322B, and a second inclined section 322E which connects the second rotatable section 322B to the third rotatable section 322C.

Here, the slider 33 may slidably move between the first rotatable section 322A and the second inclined section 322E.

Referring to FIG. 2, the detachable module 4 may include a body part 41 to which auxiliary lenses SL are detachably coupled, and an auxiliary coupling piece 42 that is disposed on a rear surface of the body part 41 and is detachably coupled to the hinge 2. For example, a component such as a sun clip (not shown) may be separately attached and detached from a front surface of the detachable module 4. In addition, in this embodiment, the auxiliary lenses SL are described as being coupled to the detachable module 4, but the auxiliary lenses SL may be selectively applied to the detachable module 4.

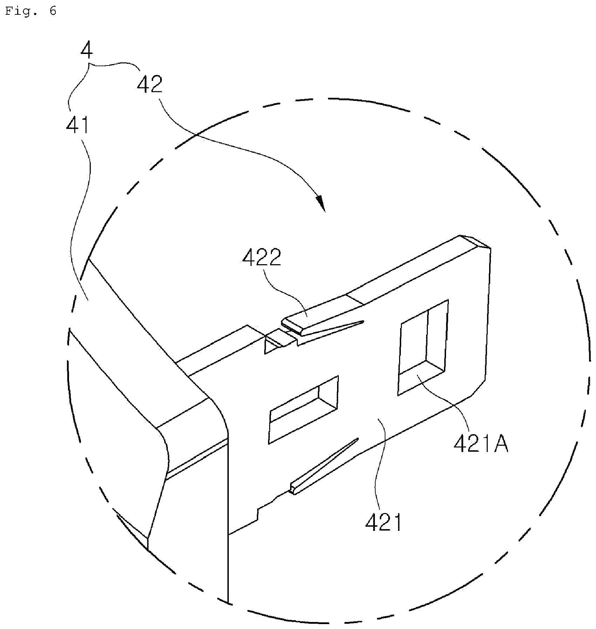

FIG. 6 is a perspective view illustrating an auxiliary coupling piece according to another embodiment of the present invention.

Referring to FIG. 6, an auxiliary coupling piece 42 may include an auxiliary insertion part 421, which is inserted into the hinge 2 and in which an auxiliary through-hole 421A to which the coupling tip 323 coupled to the through-hole 142A is detachably coupled is defined, and an auxiliary elastic pressing part 422 which protrudes from each of an upper end and a lower end of the auxiliary insertion part 421 and is pressed by an inner surface of the hinge 2 to apply repulsive force against elastic force to the inner surface of the hinge 2 while being moved inward so that the auxiliary elastic pressing part 422 is press-fitted into the hinge 2.

Referring to FIG. 3, the hinge 2 may include a first slot 21 into which the coupling piece 14 is inserted, a second slot 22 into which the first tip portion 312 is inserted, a third slot 23 which is disposed between the first slot 21 and the second slot 22 to communicate with the second slot 22, and into which the auxiliary coupling piece 42 is inserted, a hooking groove 24 with which the hooking part 144 is hooked to be supported, a first insertion hole 25 which allows an external space and the first slot 21 to communicate with each other and into which the coupling tip 323 is insertable, and a second insertion hole 26 which allows the first slot 21 and the third slot 23 to communicate with each other and into which the coupling tip 323 is insertable.

Thus, when the coupling piece 14 is inserted into the first slot 21, the first tip portion 312 is inserted into the second slot 22, and the auxiliary coupling piece 42 is inserted into the third slot 23, the through-hole 142A, the second coupling hole 312A, and the auxiliary through-hole 421A may communicate with each other through the first insertion hole 25 and the second insertion hole 26. When the rotatable part 322 is pressed by the slider 33, the coupling tip 323 may be inserted and coupled to the first insertion hole 25, the through-hole 142A, the second insertion hole 26, the auxiliary through-hole 421A, and the second coupling hole 312A in sequence.

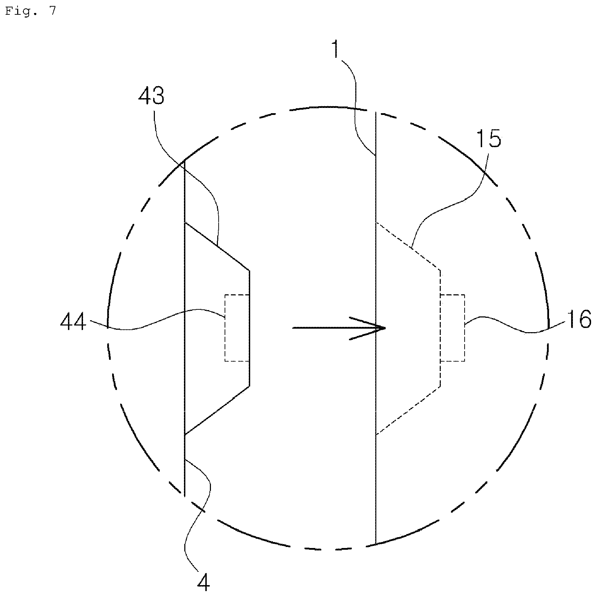

FIG. 7 is a schematic view illustrating a positioning groove and a positioning protrusion another embodiment of the present invention.

Referring to FIG. 7, a front frame 1 and a detachable module 4 may be detachably coupled to each other through magnetic force.

Specifically, the front frame 1 may include a positioning groove 15 recessed in a front surface of a protrusion 141, and a first coupling magnet 16 accommodated inside the positioning groove 15. The detachable module 4 may include a positioning protrusion 43 protruding from a rear surface of a body part 41 to be detachably coupled to the positioning groove 15, and a second coupling magnet 44 accommodated inside the positioning protrusion 43 to be detachably coupled to the first coupling magnet 16 through magnetic force.

Here, each of the positioning groove 15 and the positioning protrusion 43 may have a wedge shape in which an outside diameter thereof has a size that gradually decreases in an axial direction.

As above, according to an embodiment of the present invention, partial replacement of components constituting the glasses is enabled. Thus, the glasses may be customized in various designs according to a user's tastes or purposes, and accordingly, the glasses having various shapes for the use may be achieved.

In addition, when the pair of glasses is damaged, only the related component is replaceable. Thus, useful lifespan of a product may be increased, and expenses generated due to repurchase of the product may be minimized to have economic effects.

In addition, components are capable of being rapidly and tightly assembled without using a separate tool. Thus, usability and convenience may be increased, and the user's inconvenience caused by assembling screws periodically may be eliminated.

In addition, partial replacement of the pair of glasses is enabled to manufacture the produced components as a module. Thus, production of unnecessary components may be minimized, and accordingly, inventory may be minimized.

Although the embodiments of the present invention have been described in more detail, it is understood that the present invention should not be limited to these embodiments but various changes and modifications can be made by one ordinary skilled in the art within the spirit and scope of the present invention as hereinafter claimed. Therefore, the embodiments set forth herein are to describe the technical spirit of the present invention and not to limit. The scope of the technical spirit of the present invention is not limited by the embodiments. Moreover, the protective scope of the present invention should be determined by reasonable interpretation of the appended claims and all technical concepts coming within the equivalency range of the present application should be interpreted to be in the scope of the right of the present application.

Therefore, other implementations, other embodiments, and equivalents of the claims are encompassed by the scope of the claims set forth below.

### [Description of the Symbols]

1000: Modular glasses
1: Front frame
11: Rim
12: Bridge
13: Nose support
131: Arm
132: Pad
14: Coupling piece
141: Protrusion
142: Insertion part
142A: Through-hole
143: Elastic pressing part
144: Hooking part
15: Positioning groove
16: First coupling magnet
2: Hinge
21: First slot
22: Second slot
23: Third slot
24: Hooking groove
25: First insertion hole
26: Second insertion hole
3: Temple 3
31: Body
311: Base part
311A: First coupling hole
311B: Hooking projection
312: First tip portion
312A: Second coupling hole
313: Second tip portion
32: Coupling hook
321: Fixed part
321A: First support
321B: Second support
322: Rotatable part
322A: First pivotable section
322B: Second pivotable section
322C: Third pivotable section
322D: First inclined section
322E: Second inclined section
323: Coupling tip
33: Slider
4: Detachable module
41: Body part
42: Auxiliary coupling piece
421: Auxiliary insertion part
421A: Auxiliary through-hole
422: Auxiliary elastic pressing part
43: Positioning protrusion
44: Second coupling magnet
L: Lens
SL: Auxiliary lens

## Claims

1. A pair of detachable modular glasses comprising:
a front frame to which lenses are coupled;
a hinge coupled to each of both ends of the front frame; and
a temple rotatably coupled to the hinge,
wherein each of the front frame and the temple is detachably coupled to the hinge to be selectively replaceable.

2. The pair of detachable modular glasses of claim 1, further comprising a detachable module detachably coupled to the hinge so as to be disposed to overlap a front surface of the front frame.

3. The pair of detachable modular glasses of claim 2, wherein the front frame comprises:
a rim to which each of the lenses is detachably coupled;
a bridge which connects the rims to each other;
a nose support comprising an arm integrally connected to the rim, and a pad integrally connected to an end of the arm; and
a coupling piece extending from the rim to be detachably coupled to the hinge,
wherein the coupling piece comprises:
a protrusion extending from an end of the rim to be parallel;
an insertion part which extends vertically from an end of the protrusion to be inserted into the hinge, and in which a through-hole is defined;
an elastic pressing part that protrudes from each of an upper end and a lower end of the insertion part, and is pressed by an inner surface of the hinge to apply repulsive force against elastic force to the inner surface of the hinge while being moved inward so that the elastic pressing part is press-inserted into the hinge; and
a hooking part disposed on an end of the insertion part, and protruding to the outside of the hinge to be hooked and supported by an end of the hinge,
wherein the temple comprises:
a body detachably coupled to the hinge;
a coupling hook detachably coupled to the hinge, and configured to rotate around the hinge to fold the body; and
a slider slidably coupled to the body along an outer surface of the coupling hook, and configured to couple the coupling hook to the hinge or separate the coupling hook from the hinge,
wherein the body comprises:
a base part having an outer surface to which the slider is slidably coupled, an inner portion in which a first coupling hole to which a portion of the coupling hook is coupled is defined, and an end on which a hooking projection configured to restrict movement of the slider is provided;
a first tip portion disposed on one end of the base part to be detachably coupled to the hinge, and having an inner portion in which a second coupling hole to which an end of the coupling hook is detachably coupled is defined; and
a second tip portion extending from the other end of the base part to be bent,
wherein the coupling hook comprises:
a fixed part detachably coupled to the base part;
a rotatable part extending from the fixed part, and provided so that when the rotatable part is pressed by the slider, the rotatable part is moved inward, and when the pressing of the slider is released, the rotatable part is moved outward due to elastic force; and
a coupling tip extending from an end of the rotatable part, and provided so that when the rotatable part is moved inward, the coupling tip passes through the hinge to be coupled to the first tip portion, and when the rotatable part is moved outward, the coupling tip is separated from the first tip portion and the hinge.
